# EUROPEAN PATENT APPLICATION

(11) **EP 4 617 113 A1**
(43) Date of publication of application: **17.09.2025**
(21) Application number: 25150176.3
(22) Date of filing: 03.01.2025
(51) Int. Cl.: B60N 2/14, B60N 2/30

(54) **VEHICLE SEAT**

(30) Priority: 11.03.2024 KR 20240033968; 16.10.2024 KR 20240141496
(71) Applicant: Hyundai Transys Inc., Chungcheongnam-do 31930 (KR)
(72) Inventor: CHO, Jae Hoon, Hwaseong-si 18463 (KR); KWAK, Hae Dong, Hwaseong-si 18463 (KR); KIM, Hyeon Jae, Hwaseong-si 18463 (KR); PARK, Han Kyung, Hwaseong-si 18463 (KR); LEE, Won Young, Hwaseong-si 18463 (KR); KANG, Sin Jeong, Hwaseong-si 18463 (KR)
(74) Representative: Viering, Jentschura & Partner mbB Patent- und Rechtsanwälte

(57) **Abstract**

A vehicle seat may include a seat frame assembly including a seat cushion frame being folded up and down, a swivel device configured to swivel the seat frame assembly, a swivel lever configured to unlock the swivel device, and a hook rotated together with the swivel lever to fix the seat cushion frame.

## Description

### BACKGROUND

### (a) Technical Field

The present disclosure relates to a vehicle seat including a structure for preventing a seat cushion frame from being folded down when unlocking a seat frame assembly for swiveling.

### (b) Background Art

A vehicle is provided with seats for passengers to sit on. Recently, development of autonomous vehicles and purpose-built vehicles (PBVs) is ongoing, and accordingly, spaces in vehicles may be transformed into spaces where various functions are performed.

Seats in the vehicles may be moved or rotated freely, and unnecessary seats may be stowed to create a space. If a seat in a vehicle is not in use, the seat may be folded up and stowed. However, if the seat is rotated without being folded up, interference with other structures placed in the vehicle occurs due to the rotation of the seat. In addition, even if the seat is rotated in the folded-up state, as the folded-up state of the seat is released, problems, such as difficulty in rotating the seat or damage to the seat, occur.

### SUMMARY OF THE DISCLOSURE

The present disclosure has been made in an effort to solve the above-described problems associated with the prior art, and it is an object of the present disclosure to provide a vehicle seat including a structure for preventing a seat cushion frame from being folded down when unlocking a seat frame assembly for swiveling.

In one aspect, the present disclosure provides a vehicle seat including a seat frame assembly including a seat cushion frame being foldable up and down, a swivel device configured to swivel the seat frame assembly, a swivel lever configured to unlock the swivel device, and a hook rotated together with the swivel lever to fix the seat cushion frame.

In a preferred embodiment, the vehicle seat may further include a fixing pin configured to protrude toward an outside of the seat cushion frame, and the hook may be engaged with the fixing pin by rotation.

In another preferred embodiment, when the seat cushion frame is in a folded-up state and the swivel device is unlocked by the swivel lever, the hook may be engaged with the fixing pin to prevent the seat cushion frame from being folded down.

In still another preferred embodiment, the vehicle seat may further include a shaft configured to connect the hook and the swivel lever.

In yet another preferred embodiment, the vehicle seat may further include an elastic body configured to connect the swivel lever and the seat cushion frame, and the elastic body may apply force to the swivel lever so that the hook is maintained in a state of being engaged with the fixing pin.

In still yet another preferred embodiment, the vehicle seat may further include an elastic body configured to connect the swivel lever and the seat cushion frame, and when the seat cushion frame is in a folded-up state and the swivel device is in a locked state in which no external force is applied to the swivel device, the elastic body may apply force to the swivel lever such that the hook moves away from the fixing pin.

In a further preferred embodiment, when the seat frame assembly is swiveled in a folded-up state of the seat cushion frame, the hook may be rotated away from the fixing pin.

In another further preferred embodiment, the vehicle seat may further include an elastic body configured to connect the swivel lever and the seat cushion frame, and in a state where the rotation of the hook away from the fixing pin is completed, the elastic body may apply force to the swivel lever such that the hook moves away from the fixing pin.

In still another further preferred embodiment, the swivel device may include a floor plate coupled to a floor of a vehicle or a moving rail provided on the floor of the vehicle, the floor plate includes fixing grooves, and a rotating plate provided on the floor plate and coupled to the seat frame assembly to allow the seat frame assembly to be swivelable based on external force, and the swivel lever may be connected to the rotating plate of the swivel device through a wire.

In yet another further preferred embodiment, the rotating plate may include a rotating lever connected to the wire, an inner plate including locking pin receiving grooves configured to receive locking pins so that the locking pins are movable thereinto, and the locking pins moved in conjunction with the rotating lever and moved within the locking pin receiving grooves in a direction of being inserted into the fixing grooves, and when the wire is pulled by the swivel lever, the rotating lever may be rotated, and the locking pins may be separated from the fixing grooves by the rotation of the rotating lever so that the seat frame assembly becomes swivelable.

In still yet another further preferred embodiment, the fixing grooves of the floor plate are provided as concave portions on an inner surface of the floor plate, and a plurality of guides are formed to protrude toward the inner plate on the inner surface of the floor plate, and the fixing grooves and the guides may be formed at different elevations in a direction from the swivel device toward the seat frame assembly.

In a still further preferred embodiment, one end of each of the locking pins may be inserted into one of the fixing grooves, a remaining end of each of the locking pins may come in contact with one of the guides during a process of swiveling the seat frame assembly, and wherein the one end and the remaining end of each of the locking pins may be formed at different elevations in a stepwise manner.

In a yet still further preferred embodiment, the one end of each of the locking pins may be separated from the one of the fixing grooves by the rotation of the swivel lever, the remaining end of each of the locking pins may come in contact with the one of the guides during the process of swiveling the seat frame assembly, and when the remaining end of each of the locking pins comes in contact with the one of the guides, the one end of each of the locking pins may be moved externally of the inner plate so that the wire is pulled by the rotating lever.

In another further preferred embodiment, the wire is pulled by the rotating lever so that the hook moves away from the fixing pin and the seat cushion assembly can be folded down.

In still another further preferred embodiment, the seat frame assembly may further include a center frame and a back frame, the back frame and the seat cushion frame may be coupled to the center frame, and the center frame and the swivel device may be connected such that, when the swivel device is unlocked, the center frame may become swivelable.

In yet another further preferred embodiment, the vehicle seat may further include a fixing pin configured to protrude toward an outside of the seat cushion frame, and if the seat cushion frame is swiveled in a folded-up state of the seat cushion frame, the hook may be rotated from a state of being engaged with the fixing pin to a state of being spaced apart from the fixing pin.

Other aspects and preferred embodiments of the disclosure are discussed infra.

The above and other features of the disclosure are discussed infra.

### BRIEF DESCRIPTION OF THE DRAWINGS

The above and other features of the present disclosure will now be described in detail with reference to certain exemplary embodiments thereof illustrated in the accompanying drawings which are given hereinbelow by way of illustration only, and thus are not limitative of the present disclosure, and wherein:
FIG. 1 is a view showing a vehicle seat according to one embodiment of the present disclosure;
FIG. 2 is an exploded view of the vehicle seat of FIG. 1;
FIG. 3 is a view showing a swivel device according to one embodiment of the present disclosure;
FIG. 4 is a view showing the swivel device located on a moving rail according to one embodiment of the present disclosure;
FIG. 5 is a view showing a fixed frame assembly according to one embodiment of the present disclosure;
FIG. 6 is an exploded view of the fixed frame assembly of FIG. 5;
FIGs. 7 and 8 are views showing a locked state of a seat cushion frame according to one embodiment of the present disclosure;
FIG. 9 is a view showing an unlocked state of the seat cushion frame according to one embodiment of the present disclosure;
FIG. 10 is a view showing one surface of the swivel device according to one embodiment of the present disclosure;
FIG. 11 is a view showing the other surface of the swivel device according to one embodiment of the present disclosure;
FIG. 12 is a view for explaining the inner surface of a floor plate according to one embodiment of the present disclosure;
FIG. 13 is a view showing a folded-up state of the seat cushion frame according to one embodiment of the present disclosure;
FIGs. 14 and 15 are views showing an unlocked state of the swivel device according to one embodiment of the present disclosure;
FIG. 16 is a view showing the seat frame assembly according to one embodiment of the present disclosure that is swiveled;
FIGs. 17 and 18 are views showing a process of swiveling the swivel device according to one embodiment of the present disclosure; and
FIGs. 19 and 20 are views showing a state in which swiveling of the swivel device according to one embodiment of the present disclosure is completed.

It should be understood that the appended drawings are not necessarily to scale, presenting a somewhat simplified representation of various preferred features illustrative of the basic principles of the disclosure. The specific design features of the present disclosure as disclosed herein, including, for example, specific dimensions, orientations, locations, and shapes, will be determined in part by the particular intended application and use environment.

In the figures, reference numbers refer to the same or equivalent parts of the present disclosure throughout the several figures of the drawing.

### DETAILED DESCRIPTION

Advantages and features of the present disclosure and methods for achieving the same will become apparent from the descriptions of the embodiments hereinbelow with reference to the accompanying drawings. However, the present disclosure is not limited to the embodiments disclosed herein and may be implemented in various different forms, and these embodiments are provided to make the description of the present disclosure thorough and to fully convey the scope of the present disclosure to those skilled in the art. It is to be noted that the scope of the present disclosure is defined only by the claims. In the following description of the embodiments, the same or similar elements are denoted by the same reference numerals even though they are depicted in different drawings.

In addition, in the following description of the embodiments, terms, such as "first" and "second", are used only to distinguish various elements from each other because the names of the elements are the same, and do not imply a sequence or order unless clearly indicated by the context.

The detailed description is illustrative of the present disclosure. Further, the detailed description is intended to illustrate exemplary embodiments of the present disclosure, and the present disclosure may be used in various other combinations, modifications, and environments. That is, changes or modifications can be made within the scope of the disclosure disclosed in the description, a scope equivalent to the disclosed content, and/or the scope of technology or knowledge in the art. The following embodiments illustrate the best mode for implementing the technical idea of the present disclosure, and various changes required for specific application fields and uses of the present disclosure are also possible. Accordingly, the following detailed description of the present disclosure is not intended to limit the disclosure to the disclosed embodiments. In addition, the appended claims should be construed to include other embodiments.

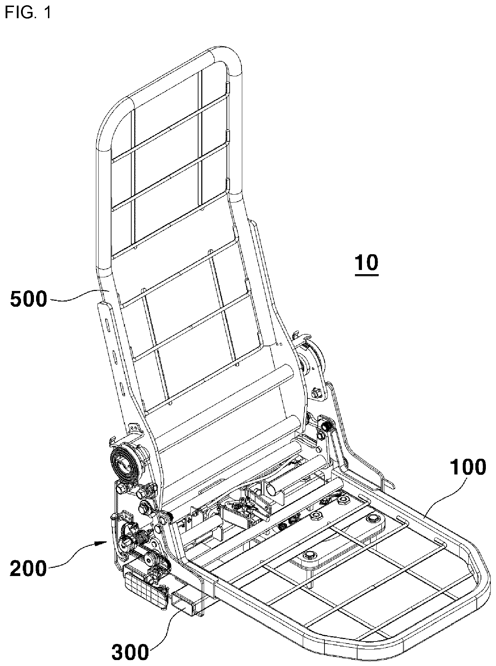

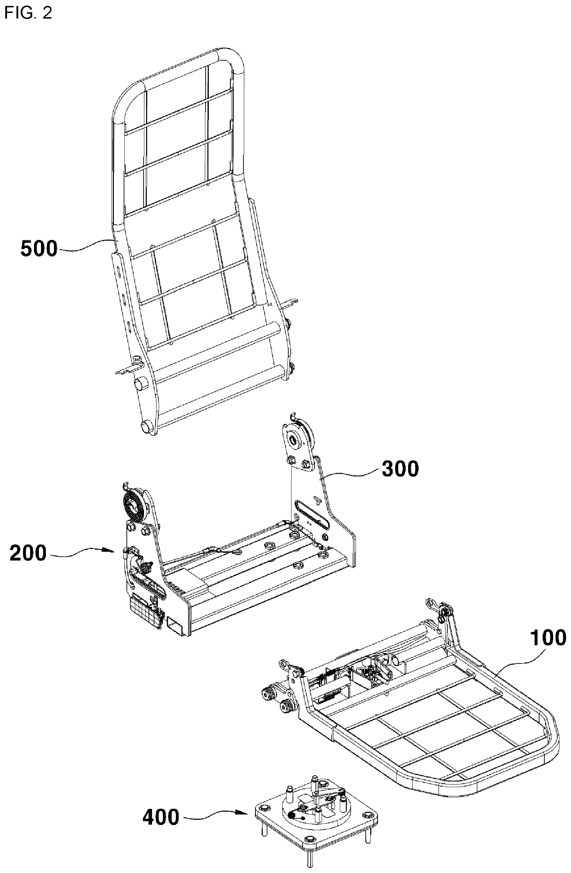

FIG. 1 is a view showing a vehicle seat according to one embodiment of the present disclosure, and FIG. 2 is an exploded view of the vehicle seat of FIG. 1.

Referring to FIGs. 1 and 2, the vehicle seat may include a seat frame assembly 10 including a seat cushion frame 100 capable of being folded up and down, a fixed frame assembly 200 configured to lock the seat cushion frame 100, and a swivel device 400 connected to the seat frame assembly 10 to swivel the seat frame assembly 10. Swiveling the seat frame assembly 10 may mean that the seat frame assembly 10 is rotated based on the position of the swivel device 400. The seat frame assembly 10 may include a center frame 300, a back frame 500, and the seat cushion frame 100. The back frame 500 and the seat cushion frame 100 may be coupled to the center frame 300. The swivel device 400 may be connected to the lower portion of the center frame 300. When the swivel device 400 is unlocked, the center frame 300 may be in a swivelable state.

The seat cushion frame 100 may be rotatably coupled to the center frame 300 to perform folded-up and folded-down functions using the center frame 300 as the center of rotation. Unlike the above-described example, the back frame 500 and the center frame 300 may be integrated, or the seat cushion frame 100 and the center frame 300 may be integrated.

The swivel device 400 connects the seat frame assembly 10 to the floor of a vehicle, and may rotate the seat frame assembly 10 connected to the floor of the vehicle. When rotating the seat frame assembly 10, the seat frame assembly 10 may be rotated in the folded-up state of the seat cushion frame 100 considering the limited interior space of the vehicle.

However, if the seat cushion frame 100 is arbitrarily changed to the folded-down state by gravity or external fore acting on the seat cushion frame 100 in the folded-up state, interference between the seat cushion frame 100 and a surrounding structure may occur when the seat frame assembly 10 is rotated. When the seat frame assembly 10 is rotated, the seat cushion frame 100 may be maintained in the folded-up state.

The fixed frame assembly 200 may unlock the swivel device 400. The fixed frame assembly 200 may prevent the seat cushion frame 100 from being folded down if the seat frame assembly 10 is rotated by the swivel device 400. Specifically, the fixed frame assembly 200 may maintain the seat cushion frame 100 in the folded-up state, but if the swivel device 400 is unlocked and the seat frame assembly 10 is rotated by a designated angle or more, when external force is applied to the seat cushion frame 100, the seat cushion frame 100 may be folded down. The fixed frame assembly 200 may maintain the seat cushion frame 100 in the folded-up state while the swivel device 400 is locked or until the seat frame assembly 10 is not rotated by the designated angle or more in the unlocked state of the swivel device 400.

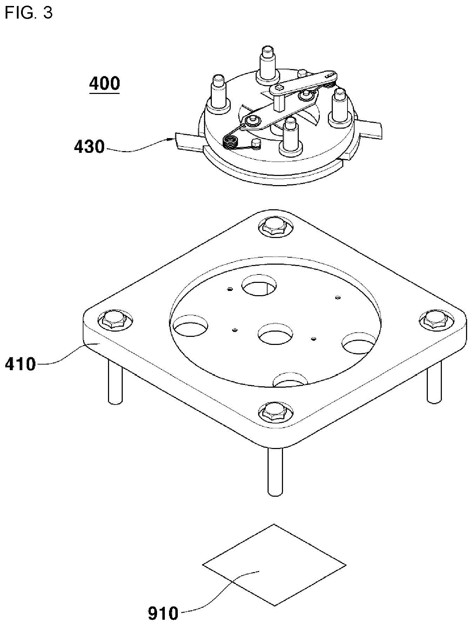

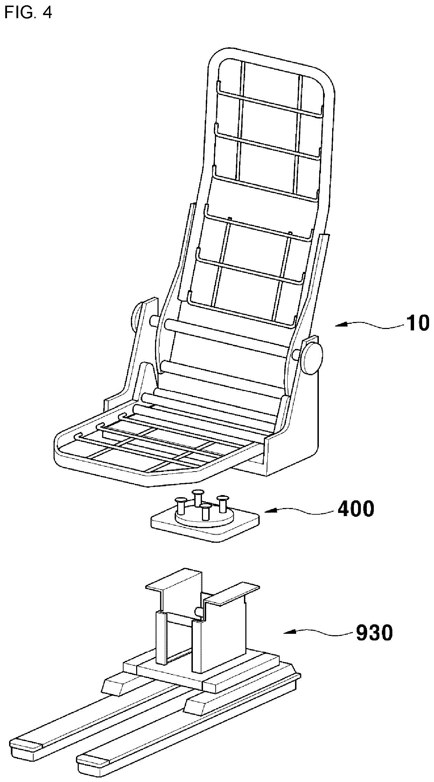

FIG. 3 is a view showing the swivel device according to one embodiment of the present disclosure, and FIG. 4 is a view showing the swivel device located on a moving rail according to one embodiment of the present disclosure.

Referring to FIGs. 1, 3, and 4, the swivel device 400 may include a floor plate 410 located on a floor 910 of a vehicle, and a rotating plate 430 located on the floor plate 410. Specifically, the floor plate 410 may be coupled to the floor 910 of the vehicle or a moving rail 930 provided on the floor 910. The swivel device 400 may be coupled to the moving rail 930 capable of moving the seat frame assembly 10 in the length direction of the vehicle or in the width direction of the vehicle, thereby being capable of varying a space where the seat frame assembly 10 is rotated in the interior space of the vehicle. The rotating plate 430 may be connected to the seat frame assembly 10 to rotate the seat frame assembly 10. Specifically, the rotating plate 430 may be coupled to the lower surface of the center frame 300 of the seat frame assembly 10. The rotating plate 430 may rotate the center frame 300 so that the entirety of the seat frame assembly 10 may be rotated.

The rotating plate 430 may be connected to the fixed frame assembly 200 through a wire. The swivel device 400 may be unlocked by operation of the fixed frame assembly 200. When external force is applied to the seat frame assembly 10 in the unlocked state of the swivel device 400, the seat frame assembly 10 may be swiveled.

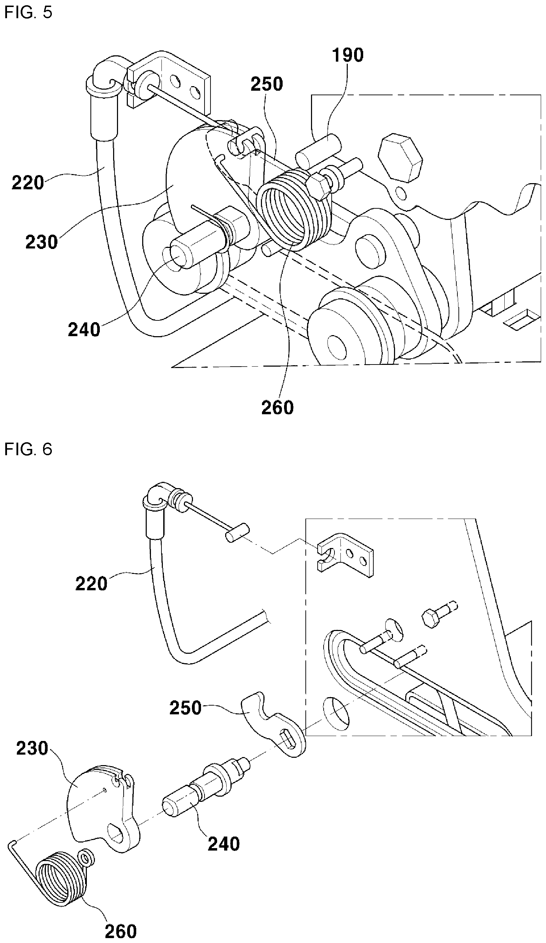

FIG. 5 is a view showing the fixed frame assembly according to one embodiment of the present disclosure, and FIG. 6 is an exploded view of the fixed frame assembly of FIG. 5.

Referring to FIGs. 2, 5, and 6, the fixed frame assembly 200 may perform locking and unlocking of the swivel device 400 and the seat cushion frame 100. The locking of the seat cushion frame 100 may mean fixing the seat cushion frame 100 so that the seat cushion frame 100 in the folded-up state is not folded down. The fixed frame assembly 200 may be disposed on the side surfaces of the seat frame assembly 10. The side surfaces of the seat frame assembly 10 may mean both sides of the seat frame assembly 10 based on a direction in which the seat cushion frame 100 in the folded-down state extends.

The fixed frame assembly 200 may include a swivel lever 230 that performs the locking or unlocking of the swivel device 400, a hook 250 that performs the locking or unlocking of the seat cushion frame 100, and an elastic body 260 that applies elastic force to the swivel lever 230. The swivel lever 230 and the hook 250 may be connected through a shaft 240. Therefore, the swivel lever 230 and the hook 250 may be rotated together. The hook 250 may be connected to one end of the shaft 240, and the swivel lever 230 may be connected to the other end of the shaft 240. The hook 250 may be disposed closer to the seat cushion frame 100, compared to the swivel lever 230. That is, the hook 250 and the swivel lever 230 may be sequentially disposed on the side surface of the seat cushion frame 100.

The swivel lever 230 may be rotated about the shaft 240. The shaft 240 may extend toward the side surface of the seat cushion frame 100. That is, the shaft 240 may extend in a direction substantially perpendicular to the direction in which the seat cushion frame 100 in the folded-down state extends, and the swivel lever 230 may be rotated about the extending direction of the seat cushion frame 100 as an axis. For example, the swivel lever 230 may be fan-shaped. The swivel lever 230 may be connected to a wire 220. The wire 220 may connect the swivel device 400 and the swivel lever 230. As the swivel lever 230 is rotated, the swivel lever 230 may pull the wire 220 so as to unlock the swivel device 400. Specifically, when the swivel lever 230 is rotated in a direction toward the front of the seat frame assembly 10, the swivel lever 230 may pull the wire 220 so as to unlock the swivel device 400. The direction toward the front of the seat frame assembly 10 may mean a direction in which the hook 250 is rotated toward a fixing pin 190.

In order to unlock the swivel device 400, the swivel lever 230 may apply external force to the swivel device 400. The swivel lever 230 may be manually rotated by a user or automatically rotated by user's operation though a separate electric motor.

The hook 250 may be rotated together with the swivel lever 230 to fix the seat cushion frame 100. The hook 250 may be rotated about the shaft 240. The fixing pin 190 may be provided on the side surface of the seat cushion frame 100. The fixing pin 190 may protrude toward the outside of the seat cushion frame 100 on the side surface of the seat cushion frame 100. The hook 250 may be engaged with the fixing pin 190 by rotation. When the hook 250 is engaged with the fixing pin 190 in the folded-up state of the seat cushion frame 100, the seat cushion frame 100 may be prevented from being folded down. However, when the hook 250 is rotated in the folded-down state of the seat cushion frame 100, the hook 250 may not be engaged with the fixing pin 190. That is, the position of the fixing pin 190 may be changed when the seat cushion frame 100 is folded up or folded down.

The elastic body 260 may connect the seat cushion frame 100 and the swivel lever 230. The elastic body 260 may be a torsion spring that receives a twisting force about a central axis. One end of the elastic body 260 may be connected to the seat cushion frame 100, and the other end of the elastic body 260 may be connected to the swivel lever 230. The central axis of the elastic body 260 may be located between the one end and the other end. The central axis of the elastic body 260 may coincide with the direction in which the fixing pin 190 protrudes toward the outside of the seat cushion frame 100. That is, the central axis of the elastic body 260 may coincide with the protruding direction of the fixing pin 190. One end of the elastic body 260 may be fixed to the seat cushion frame 100, and the other end of the elastic body 260 may be connected to the swivel lever 230 so that the position of the other end of the elastic body 260 is variable. Therefore, the elastic body 260 may apply force in a direction from the one end to the other end thereof, and the direction of the force applied by the elastic body 260 to the swivel lever 230 may be varied depending on the position of the swivel lever 230. The elastic body 260 may apply force to the swivel lever 230 so that the swivel lever 230 in the stopped state after completing movement maintains the position thereof. That is, the position of the elastic body 260 may be changed depending on rotation of the swivel lever 230.

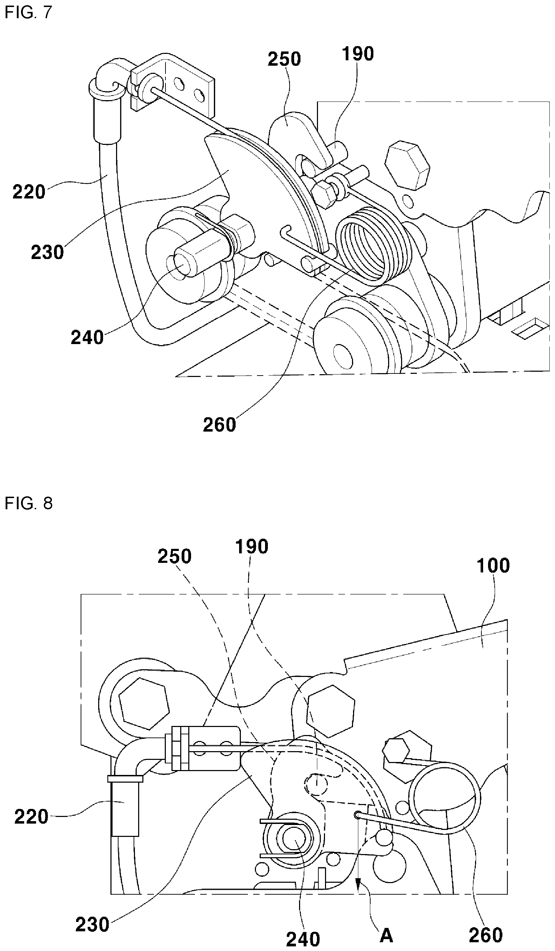

FIGs. 7 and 8 are views showing the locked state of the seat cushion frame according to one embodiment of the present disclosure.

Referring to FIGs. 2, 7, and 8, the swivel lever 230 is operated in the folded-up state of the seat cushion frame 100, thereby being capable of unlocking the swivel device 400. The swivel lever 230 may be operated so that the hook 250 may be engaged with the fixing pin 190. As the hook 250 is engaged with the fixing pin 190, the seat cushion frame 100 may be prevented from being folded down. The elastic body 260 may apply force to the swivel lever 230 in a direction opposite to a direction in which the hook 250 moves away from the fixing pin 250. In the state in which the hook 250 is engaged with the fixing pin 190, the elastic body 260 may apply force to the swivel lever 230 in a direction A. The state in which the hook 250 is engaged with the fixing pin 190 may be maintained by the force applied by the elastic body 260 to the swivel lever 230.

According to one embodiment of the present disclosure, if the swivel device 400 is unlocked in the folded-up state of the seat cushion frame 100, the folded-up state of the seat cushion frame 100 may be maintained by the hook 250 rotated in conjunction with the swivel lever 230, which is an element configured to unlock the swivel device 400. Further, the engaged state between the hook 250 and the fixing pin 190 may be maintained by the force applied by the elastic body 260 to the swivel lever 230.

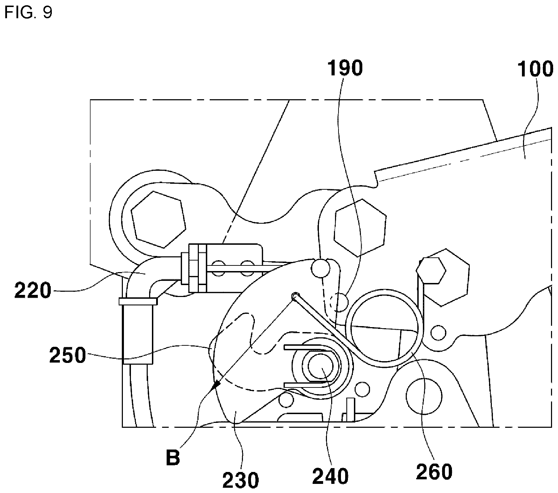

FIG. 9 is a view showing the unlocked state of the seat cushion frame according to one embodiment of the present disclosure.

Referring to FIGs. 2 and 9, the seat cushion frame 100 may be unlocked during a process of swiveling the seat frame assembly. If the seat cushion frame 100 is swiveled in the folded-up state of the seat cushion frame 100, the hook 250 may be rotated from a state of being engaged with the fixing pin 190 to a state of being spaced apart from the fixing pin 190. That is, if the swivel device 400 is unlocked and the seat frame assembly is rotated by the designated angle or more, the seat cushion frame 100 may be folded down when external force is applied to the seat cushion frame 100.

In the process of swiveling the seat frame assembly, if the seat frame assembly is rotated by the designated angle or more, the swivel device 400 pulls the wire 220. Accordingly, the swivel lever 230 may be rotated toward the rear of the seat frame assembly so that the hook 250 and the fixing pin 190 may be spaced apart from each other. The swivel lever 230 that has completed the rotation may receive force in a direction toward the rear of the seat frame assembly from the elastic body 260. The elastic body 260 may apply force to the swivel lever 230 in a direction B, i.e., the direction in which the hook 250 moves away from the fixing pin 190. The swivel lever 230 may maintain the current position thereof by the force applied by the elastic body 260 to the swivel lever 230. If the rotation of the hook 250 in the direction of moving away from the fixing pin 190 is completed, the swivel device 400 may be in the locked state.

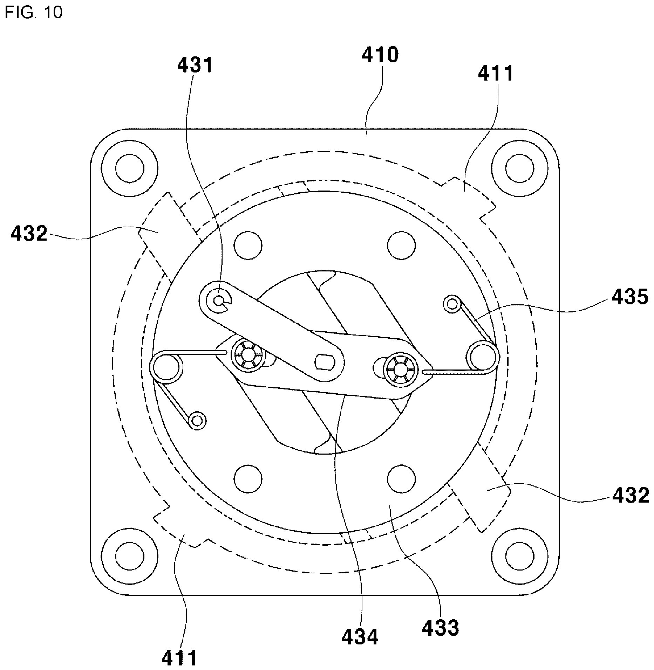

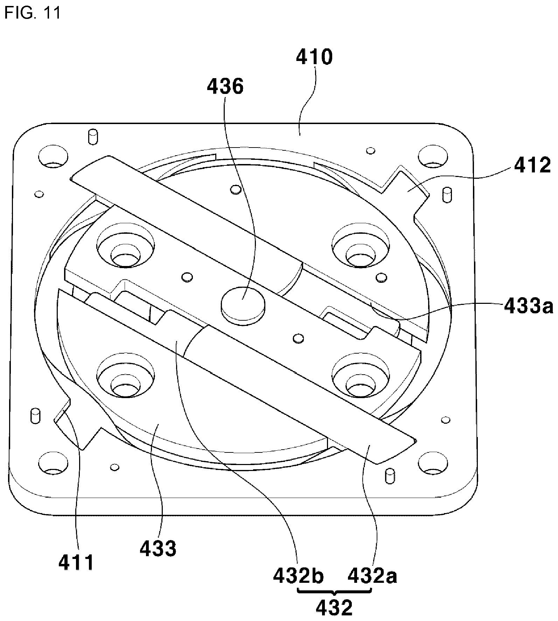

FIG. 10 is a view showing one surface of the swivel device according to one embodiment of the present disclosure, and FIG. 11 is a view showing the other surface of the swivel device according to one embodiment of the present disclosure.

Referring to FIGs. 5, 10, and 11, the swivel device 400 may include the floor plate 410 and the rotating plate 430. The rotating plate 430 may be disposed in an internal space formed by the floor plate 410.

The floor plate 410 may include a plurality of fixing grooves 411. The fixing grooves 411 may be spaced apart from each other. For example, four fixing grooves 411 may be provided. Each of the fixing grooves 411 may mean a concave portion facing the outer surface of the floor plate 410. In other words, the fixing grooves 411 may mean concave portions on the inner surface of the floor plate 410. The inner surface of the floor plate 410 may face the outer surface of the rotating plate 430.

The rotating plate 430 may include a rotating lever 431 connected to the wire 220, locking pins 432 inserted into the fixing grooves 411, an inner plate 433 that accommodates the locking pins 432, and a lever rod 434 connected to the locking pins 432. The locking pins 432, the inner plate 433, the lever rod 434, and the rotating lever 431 may be sequentially disposed. A direction from the locking pins 432 toward the rotating lever 431 may be the direction from the swivel device 400 toward the seat frame assembly 10 of FIG. 1.

The rotating lever 431 and the lever rod 434 may be fixedly connected to each other. An angle formed by the length direction of the rotating lever 431 and the length direction of the lever rod 434 may not be changed. One end of the rotating lever 431 may be connected to the wire 220, and the other end of the rotating lever 431 may be connected to a central shaft 436 of the rotating plate 430. A hole through which the central shaft 436 passes may be formed in the lever rod 434.

The lever rod 434 may be connected to the inner plate 433 by springs 435. The springs 435 may be connected to both ends of the lever rod 434. The lever rod 434 may be connected to the locking pins 432 provided as a pair. As the position of the lever rod 434 is changed, the direction of force applied by the springs 435 to the lever rod 434 may be varied. For example, the springs 435 may be torsion springs.

The locking pins 432 may be disposed within locking pin receiving grooves 433a provided in the inner plate 433. For example, the locking pins 432 and the locking pin receiving groove 433a may be provided as a pair. The locking pins 432 may be moved in the locking pin receiving grooves 433a. Each of the locking pins 432 may include one end 432a inserted into the fixing groove 411 and the other end 432b opposite thereto. As the swivel lever 230 pulls the wire 220, the rotating lever 431 and the lever rod 434 may be rotated, and accordingly, one end of each of the locking pins 432 connected to the lever rod 434 may be separated from the corresponding fixing groove 411. That is, in the locked state of the swivel device 400, one end 432a of each of the locking pins 432 may be in a state of being inserted into one of the plurality of fixing grooves 411. For example, if the locking pins 432 are provided as a pair, the respective ends 432a of the pair of locking pines 432 may be inserted into two of the plurality of fixing grooves 411. The pair of locking pins 432 may be disposed parallel to each other, and the direction in which one end 432a of one locking pin 432 of the pair of locking pins 432 faces and the direction in which the other end 432b of the other locking pin 432 faces may coincide with each other. The central shaft 436 may be located in a space between the pair of locking pins 432, and the central shaft 436 may be connected to the inner plate 433. The inner plate 433 may be disc-shaped, and may be rotated in the floor plate 410. The inner plate 433 may be rotated by external force due to a swivel motion. That is, the inner plate 433 may be connected to the seat frame assembly to be rotated by the rotation of the seat frame assembly.

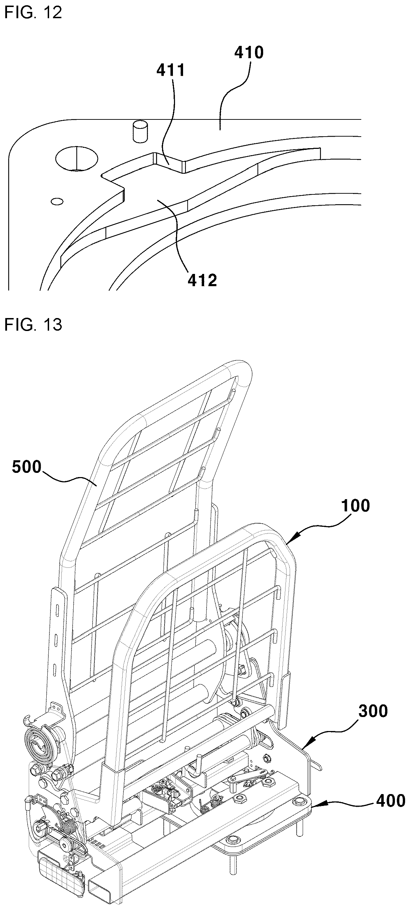

FIG. 12 is a view for explaining the inner surface of the floor plate according to one embodiment of the present disclosure.

Referring to FIGs. 11 and 12, the floor plate 410 may include the plurality of fixing grooves 411 and a plurality of guides 412. The fixing grooves 411 may be the concave portions provided on the inner surface of the floor plate 410. The guides 412 may be portions that protrude toward the inner pate 433 on the inner surface of the floor plate 410. The fixing grooves 411 and the guides 412 may be formed at different elevations lin the direction from the swivel device 400 toward the seat frame assembly. For example, the fixing grooves 411 and the guides 412 may be provided in the same number, and four fixing grooves 411 and four guides 412 may be provided.

One end 432a of the locking pin 432 may be inserted into one of the fixing grooves 411, and the other end 432b of the locking pin 432 may come in contact with one of the guides 412. The one end 432a of the locking pin 432 and the other end 432b of the locking pin 432 may be provided to be formed in layers with different elevations. The one end 432a of the locking pin 432 and the other end 432b of the locking pin 432 may form a stepwise shape so as to match the fixing grooves 411 and the guides 412 formed at different heights. That is, the heights of the one end 432a of the locking pin 432 and the other end 432b of the locking pin 432 may be different from each other based on one surface of the locking pin 432 facing in the direction from the swivel device 400 toward the seat frame assembly.

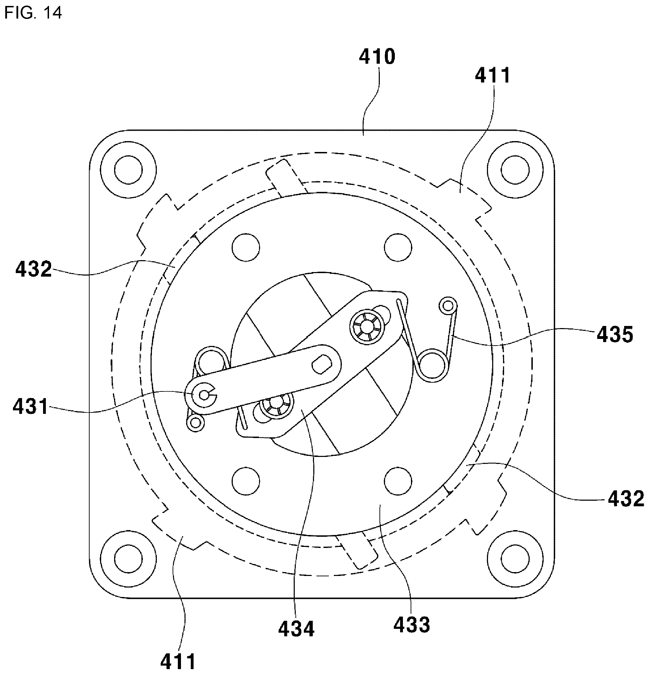

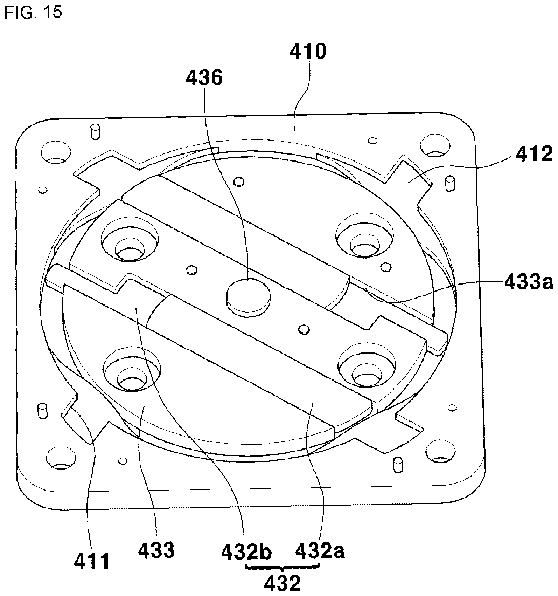

FIG. 13 is a view showing the folded-up state of the seat cushion frame according to one embodiment of the present disclosure, and FIGs. 14 and 15 are views the unlocked state of the swivel device according to one embodiment of the present disclosure.

Referring to FIG. 8 and 13 to 15, when the swivel lever 230 pulls the wires 220 in the folded-up state of the seat cushion frame 100, the swivel device 400 may be unlocked. Specifically, when the wire 220 is pulled by the swivel lever 230, the rotating lever 431 is rotated, and the locking pins 432 may be separated from the fixing grooves 411 by the rotation of the rotating lever 431 and the lever rod 434. At this time, both the ends 432a of the pair of locking pins 432 may be separated from the fixing grooves 411. As the locking pins 432 are separated from the fixing grooves 411, the seat frame assembly 10 may be in the swivelable state. The springs 435 may apply force in a direction in which the lever rod 434 is rotated, and accordingly, the locking pins 432 may be maintained in the state of being separated from the fixing grooves 411. For example, the directions of forces applied by the two springs 435 to one end and the other end of the lever rod 434 may be parallel to each other.

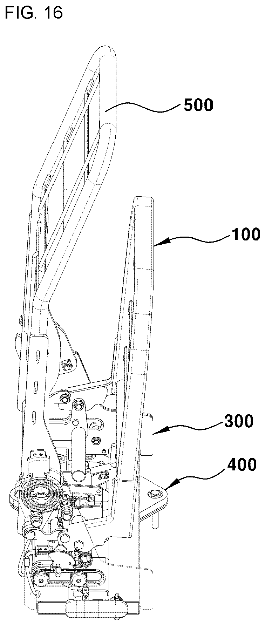

FIG. 16 is a view showing the seat frame assembly according to one embodiment of the present disclosure that is swiveled. Referring to FIGs. 10, 11, and 16, the seat frame assembly 10 may be swiveled in the unlocked state of the swivel device 400. When the swivel motion is performed by applying external force to the seat frame assembly 10, the inner plate 433 connected to the seat frame assembly 10 may be rotated. As the springs 435 applies force in the direction in which the lever rod 434 is rotated, the locking pins 432 may be maintained in the state of being separated from the fixing grooves 411, and the inner plate 433, the locking pins 432, the rotating lever 431, and the lever rod 434 may be rotated together.

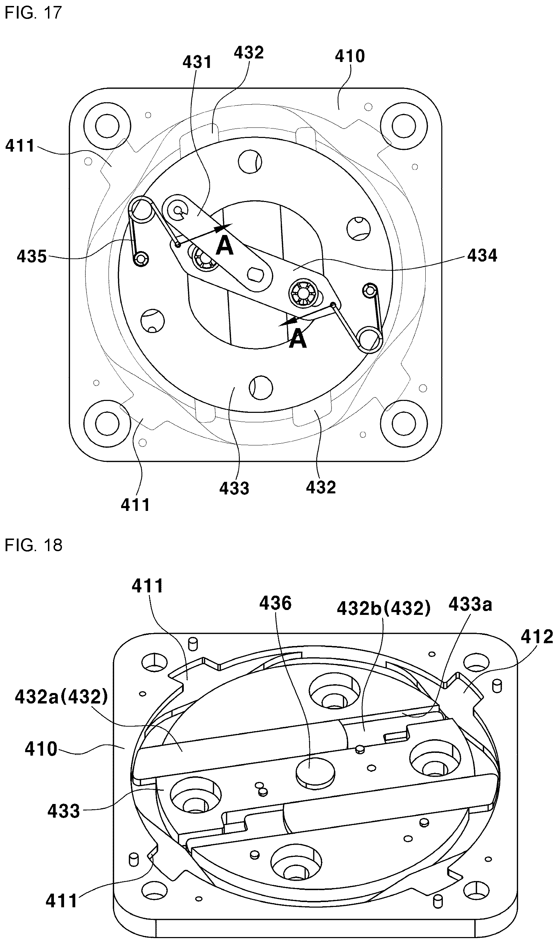

FIGs. 17 and 18 are views showing a process of swiveling the swivel device according to one embodiment of the present disclosure.

Referring to FIGs. 5 and 16 to 18, when the other end 432b of each of the locking pins 432 comes in contact with one of the guides 412, the locking pins 432 may be moved toward the inner surface of the floor plate 410. When the locking pins 432 are moved toward the external part of the inner plate 433, the rotating lever 431 and the lever rod 434 linked with the locking pins 432 may be rotated to pull the wire 220. As the rotating lever 432 pulls the wire 220, the swivel lever 230 may be rotated toward the rear of the seat frame assembly 10, the hook 250 and the fixing pin 190 may be spaced apart from each other. When the hook 250 and the fixing pin 190 do not contact each other, the locking of the seat cushion frame 100 is released, and thus the seat cushion frame 100 is capable of being folded down.

However, since the rotating lever 431 may be rotated together with the inner plate 433 even if the inner plate 433 is rotated by external force until the other end 432b of each of the locking pins 432 comes in contact with one of the guides 412 after one end 432a of each of the locking pins 432 is separated from the fixing groove 411, the rotating lever 431 may not pull the wire 220. Therefore, until the other end 432b of each of the locking pins 432 comes in contact with one of the guides 412 after one end 432a of each of the locking pins 432 is separated from the fixing groove 411, connection between the hook 250 and the fixing pin 190 may be maintained.

As the inner plate 433 is rotated by the rotation of the seat frame assembly 10, the other ends 432a of the locking pins 432 may come in contact with the guides 412. As the inner plate 433 is continuously rotated in the contact state between the other ends 432a of the locking pins 432 and the guides 412, the locking pins 432 may be moved toward the external part of the inner plate 433. That is, during the swivel process of the seat frame assembly 110, the swivel lever 230 may start to be rotated at a point in time when the other ends 432a of the locking pins 432 come in contact with the guides 412, and thereby contact between the hook 250 and the fixing pin 190 may be eliminated. The locking of the seat cushion frame 100 is maintained at a point in time when the seat frame assembly 10 starts to be swiveled, but the seat cushion frame 100 may be unlocked when the rotation of the seat frame assembly 10 is performed at a designated angle.

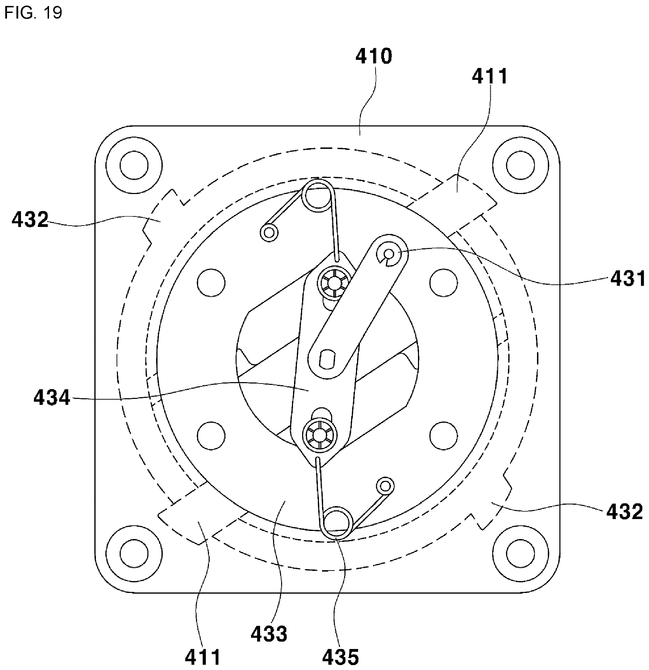

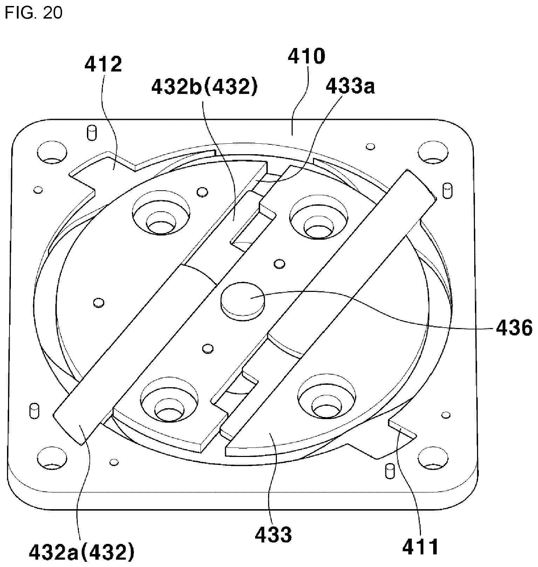

FIGs. 19 and 20 are views showing a state in which swiveling of the swivel device according to one embodiment of the present disclosure is completed.

Referring to FIGs. 9, 19, and 20, if the one end 432a of each of the locking pins 432 is inserted into one of the fixing grooves 411 again, swiveling of the seat frame assembly 10 may be completed. During the process of inserting the ends 432a of the locking pins 432 into the fixing grooves 411, the rotating lever 431 and the lever rod 434 linked with the locking pins 432 may be rotated to completely pull the wire 220. Accordingly, the swivel lever 230 may be rotated in the direction toward the rear of the seat frame assembly 10. In the state in which the rotation of the swivel lever 230 is completed, the elastic body 260 may apply force to the swivel lever 230 so that the swivel lever 230 may maintain the current position thereof. The springs 435 may apply force to the lever rod 434 so that the locking pins 432 may be maintained in the state of being inserted into the fixing grooves 411.

As is apparent from the above description, according to one embodiment of the present disclosure, if a swivel device is unlocked in a state in which a seat cushion frame is folded up, the folded-up state of the seat cushion frame may be maintained by a hook rotated in conjunction with a swivel lever configured to unlock the swivel device. In addition, engagement between the hook and a fixing pin connected to the seat cushion frame may be maintained by force applied by an elastic body to a swivel lever.

According to one embodiment of the present disclosure, the swivel lever configured to unlock the swivel device may be connected to the seat cushion frame by the elastic body, and the elastic body may apply force to the swivel lever to maintain the current state of the swivel lever, thereby being capable of maintaining the locked state and the unlocked state of the swivel device.

The disclosure has been described in detail with reference to preferred embodiments thereof. However, it will be appreciated by those skilled in the art that changes may be made in these embodiments without departing from the principles and spirit of the disclosure, the scope of which is defined in the appended claims and their equivalents.

## Claims

1. A vehicle seat comprising:
a seat frame assembly comprising a seat cushion frame being foldable up and down;
a swivel device configured to swivel the seat frame assembly;
a swivel lever configured to unlock the swivel device; and
a hook rotated together with the swivel lever to fix the seat cushion frame.

2. The vehicle seat of claim 1, further comprising a fixing pin configured to protrude toward an outside of the seat cushion frame,
wherein the hook is configured to be engaged with the fixing pin by rotation.

3. The vehicle seat of claim 2, wherein, when the seat cushion frame is in a folded-up state and the swivel device is unlocked by the swivel lever, the hook is engaged with the fixing pin to prevent the seat cushion frame from being folded down,
wherein the hook and the swivel lever are connected by a shaft.

4. The vehicle seat of claim 2 or 3, further comprising an elastic body configured to connect the swivel lever and the seat cushion frame,
wherein the elastic body applies force to the swivel lever so that the hook is maintained in a state of being engaged with the fixing pin.

5. The vehicle seat of anyone of claims 2-4, further comprising an elastic body configured to connect the swivel lever and the seat cushion frame,
wherein, when the seat cushion frame is in a folded-up state and the swivel device is in a locked state in which no external force is applied to the swivel device, the elastic body applies force to the swivel lever such that the hook moves away from the fixing pin.

6. The vehicle seat of anyone of claims 2-5, wherein, when the seat frame assembly is swiveled in a folded-up state of the seat cushion frame, the hook is configured to be rotated away from the fixing pin.

7. The vehicle seat of claim 6, further comprising an elastic body configured to connect the swivel lever and the seat cushion frame,
wherein, in a state where the rotation of the hook away from the fixing pin is completed, the elastic body is configured to apply force to the swivel lever such that the hook moves away from the fixing pin.

8. The vehicle seat of claim 6 or 7, wherein the swivel device comprises:
a floor plate coupled to a floor of a vehicle or a moving rail provided on the floor of the vehicle, the floor plate including fixing grooves; and
a rotating plate provided on the floor plate and coupled to the seat frame assembly to allow the seat frame assembly to be swivelable based on external force,
wherein the swivel lever is connected to the rotating plate of the swivel device through a wire.

9. The vehicle seat of claim 8, wherein the rotating plate comprises:
a rotating lever connected to the wire;
an inner plate comprising locking pin receiving grooves configured to receive locking pins so that the locking pins are movable thereinto; and
the locking pins configured to be moved in conjunction with the rotating lever and configured to be moved within the locking pin receiving grooves in a direction of being inserted into the fixing grooves,
wherein, when the wire is pulled by the swivel lever, the rotating lever is configured to be rotated, and the locking pins are configured to be separated from the fixing grooves by the rotation of the rotating lever so that the seat frame assembly becomes swivelable.

10. The vehicle seat of claim 9, wherein the fixing grooves of the floor plate are provided as concave portions on an inner surface of the floor plate, and a plurality of guides are formed to protrude toward the inner plate on the inner surface of the floor plate, and
wherein the fixing grooves and the guides are formed at different elevations in a direction from the swivel device toward the seat frame assembly.

11. The vehicle seat of claim 10, wherein one end of each of the locking pins is configured to be inserted into one of the fixing grooves, and a remaining end of each of the locking pins is configured to come in contact with one of the guides during a process of swiveling the seat frame assembly,
wherein the one end and the remaining end of each of the locking pins are formed at different elevations in a stepwise manner.

12. The vehicle seat of claim 11, wherein the one end of each of the locking pins is configured to be separated from the one of the fixing grooves by the rotation of the swivel lever and the remaining end of each of the locking pins is configured to come in contact with the one of the guides during the process of swiveling the seat frame assembly, and
wherein, when the remaining end of each of the locking pins comes in contact with the one of the guides, the one end of each of the locking pins is configured to be moved externally of the inner plate so that the wire is pulled by the rotating lever.

13. The vehicle seat of anyone of claims 9-12, wherein the wire is configured to be pulled by the rotating lever so that the hook is configured to move away from the fixing pin and the seat cushion assembly can be folded down.

14. The vehicle seat of anyone of claims 1-13, wherein the seat frame assembly further comprises a center frame and a back frame, and the back frame and the seat cushion frame are coupled to the center frame, and
wherein the center frame and the swivel device are connected such that, when the swivel device is unlocked, the center frame becomes swivelable.

15. The vehicle seat of anyone of claims 1-14, further comprising a fixing pin configured to protrude toward an outside of the seat cushion frame,
wherein, when the seat cushion frame is swiveled in a folded-up state of the seat cushion frame, the hook is configured to be rotated from a state of being engaged with the fixing pin to a state of being spaced apart from the fixing pin.
